# EUROPÄISCHE PATENTSCHRIFT

(11) **EP 2 649 393 B1**
(45) Veröffentlichungstag und Bekanntmachung des Hinweises auf die Patenterteilung: **21.02.2018**
(21) Anmeldenummer: 11810548.5
(22) Anmeldetag: 01.12.2011
(51) Int. Cl.: F26B 21/04, F26B 21/06, F26B 23/00

(54) **VERFAHREN ZUR HOLZTROCKNUNG**
METHOD FOR DRYING WOOD
PROCÉDÉ DE SÉCHAGE DE BOIS

(30) Priorität: 07.12.2010 AT 20292010
(43) Veröffentlichungstag der Anmeldung: 16.10.2013
(73) Patentinhaber: Mühlböck, Kurt, Ing., 4906 Eberschwang (AT)
(72) Erfinder: Mühlböck, Kurt, Ing., 4906 Eberschwang (AT)
(74) Vertreter: Patentanwaltskanzlei Hübscher
(86) Internationale Anmeldenummer: PCT/AT2011/050035
(87) Internationale Veröffentlichungsnummer: WO 2012/075518

(56) Entgegenhaltungen:
- AT-B1- 504 578
- DE-A1- 2 941 037
- DE-T2- 68 924 974
- US-A1- 2004 188 058
- US-A1- 2006 168 842

## Beschreibung

### Technisches Gebiet

Die Erfindung bezieht sich auf ein Verfahren zur Holztrocknung, wobei das Holz in einer Vortrocknungskammer mit einer erwärmten, über einen Kreuzstromwärmetauscher angesaugten Zuluft und in einer Haupttrocknungskammer mit einer im Kreislauf über ein Heizregister geführten Umluft beaufschlagt wird, aus der ein Teilstrom als Abluft ausgeschieden und durch Zuluft ersetzt wird, die mit Hilfe der Abluft in einem Kreuzstromwärmetauscher vorgewärmt wird.

### Stand der Technik

Um Holzstapel mit stark unterschiedlicher Anfangsfeuchtigkeit gemeinsam in einem engen Toleranzbereich auf eine vorgegebene Endfeuchtigkeit trocknen zu können, und zwar mit einem vergleichsweise niedrigen Energieeinsatz, ist es bekannt (AT 504578 B), das Holz in zwei eingangsseitigen Trocknungzonen mit zwischen diesen Trocknungszonen zugeführter, erwärmter Zuluft in einem Feuchtigkeitsbereich oberhalb der Fasersättigung vorzutrocknen und anschließend in wenigstens einer weiteren Trocknungszone mit Hilfe eines im Kreislauf über ein Heizregister geführten Umluftstroms auf die Endfeuchtigkeit zu trocknen. Die fühlbare Wärme des aus dem Umluftstrom als Abluft ausgeschiedenen und durch Zuluft ersetzten Teilstroms der erwärmten Umluft wird wie die fühlbare Wärme der nach dem Durchströmen der Vortrocknungszonen als Abluft ausgeschiedenen Zuluft zur Vorwärmung der jeweiligen Zuluft einerseits zur Ergänzung der Umluftströmung und anderseits zur Vortrocknung der Holzstapel in gesonderten Kreuzstromwärmetauschern genützt. Allerdings kann nur ein Vergleichsweise kleiner Anteil der Wärmeenergie der Abluft aus den Trocknungszonen zur Vorwärmung genützt werden, weil bei den gegebenen Temperaturverhältnissen der während der Trocknung aufgenommene Wasserdampf kaum kondensiert und daher die Kondensationswärme nicht für die Vorwärmung zur Verfügung steht.

### Darstellung der Erfindung

Der Erfindung liegt somit die Aufgabe zugrunde, ein Verfahren zur Holztrocknung anzugeben, bei dem der Wärmeinhalt der Abluft nach dem Trocknungsvorgang vorteilhaft für die Vorwärmung der für die Trocknung erforderlichen Zuluft genützt werden kann.

Ausgehend von einem Verfahren zur Holztrocknung der eingangs geschilderten Art löst die Erfindung die gestellte Aufgabe dadurch, dass mit der aus der Umluft ausgeschiedenen Abluft ein der Vortrocknungskammer und der Haupttrocknungskammer vorgeschalteter, gemeinsamer Kreuzstromwärmetauscher beaufschlagt wird und dass mit Hilfe des in diesem Kreuzstromwärmetauscher erwärmten Zuluftstroms einerseits das Holz in der Vortrocknungskammer vorgetrocknet und anderseits die aus der Umluft der Haupttrocknungskammer ausgeschiedene Abluft ergänzt wird.

Der Erfindung liegt die Erkenntnis zugrunde, dass wegen der bekannten Strömungsführung im Bereich jedes Kreuzstromwärmetauschers die Abluftrate, mit der der jeweilige Kreuzstromwärmetauscher beaufschlagt wird, der vorzuwärmenden Zuluftrate entspricht, sodass bei den vergleichsweise niedrigen Differenzen zwischen den Temperaturen der Abluft und der Zuluft nicht erwartet werden kann, dass ein Großteil des während der Trocknung von der Zuluft aufgenommenen, in der Abluft enthaltenen Wasserdampfs im Bereich des jeweiligen Kreuzstromwärmetauschers kondensiert. Wird jedoch die dem Kreuzstromwärmetauscher zugeführte Zuluftmenge im Vergleich zur Menge der den Kreuzstromwärmetauscher beaufschlagenden Abluftmenge drastisch erhöht, so kann trotz der vergleichsweise geringen Temperaturunterschiede der Abluft die Wärmemenge entzogen werden, die zur Kondensierung zumindest eines wesentlichen Teils des aufgenommenen Wasserdampfs führt, was eine weitgehende Nutzung der Wärmeenergie der Abluft mit sich bringt. Aus diesem Grund wird nach der Erfindung mit der in einem Teilstrom aus der erwärmten Umluftströmung der Haupttrocknungskammer ausgeschiedenen Abluft ein gemeinsamer Kreuzstromwärmetauscher für die Vor- und Haupttrocknungskammer beaufschlagt, über den sowohl die für die Vortrocknung als auch die für den Ersatz der aus der Umluft der Haupttrocknungskammer ausgeschiedenen Abluft benötigte Zuluft angesaugt wird. Die weitgehende Nutzung der Wärmeenergie der aus der Umluftströmung der Haupttrocknungskammer ausgeschiedenen Abluft zur Erwärmung der Zuluft für die Vortrocknung macht im Allgemeinen eine zusätzliche Erwärmung dieser Zuluft überflüssig, sodass im Vergleich zu herkömmlichen Trocknungsanlagen dieser Art eine erhebliche Energieeinsparung erzielt wird, ohne das Trocknungsergebnis nachteilig zu beeinflussen.

Obwohl es lediglich darauf ankommt, mit einer geringen Abluftrate eine hohe Zuluftrate vorzuwärmen, was mit Sonderkonstruktionen eines Kreuzstromwärmetauschers ohne weiteres möglich ist, ergeben sich besonders einfache Konstruktionsverhältnisse, wenn die aus der Umluft der Haupttrocknungskammer ausgeschiedene Abluft nacheinander mehrere für die Zuluft parallelgeschaltete Wärmetauschereinheiten eines Kreuzstromwärmetauschers durchströmt, weil in diesem Fall übliche Wärmetauschereinheiten eingesetzt werden können.

Wie bereits erwähnt wurde, kann mit der über die Abluft aus der Haupttrocknungskammer erwärmten Zuluft für die Vortrocknungskammer eine gute Vortrocknung des Holzes erreicht werden, wobei bei einer entsprechenden Auslegung die Temperatur der Abluft aus der Vortrocknungskammer weitgehend an die Zulufttemperatur angeglichen werden kann, sodass eine Ableitung ins Freie sinnvoll erscheint. Weist allerdings die Abluft aus der Vortrocknungskammer einen gegenüber der Zuluft für eine wirtschaftliche Wärmerückgewinnung ausreichenden Wärmeüberschuss auf, so kann die Abluft aus der Vortrocknungskammer einen dem mit der Abluft aus der Haupttrocknungskammer beaufschlagten Kreuzstromwärmetauscher vorgeschalteten Kreuzstromwärmetauscher für die Zuluft beaufschlagen, um diesen Wärmeüberschuss zu nützen.

Obwohl zur erfindungsgemäßen Trocknung zumindest zwei in Förderrichtung des Trocknungsguts hintereinander angeordnete Trocknungskammern für eine kontinuierliche Vor- und Haupttrocknung vorteilhaft sind, ist dieses Trocknungsverfahren nicht auf eine Förderung des Trocknungsguts von der Vortrocknungskammer zur Haupttrocknungskammer beschränkt. So könnte das Trocknungsgut auch in derselben Trocknungskammer nacheinander einer Vor-und einer Haupttrocknung unterworfen werden. Zu diesem Zweck sind wenigstens zwei Trocknungskammern vorzusehen, die abwechselnd als Vortrocknungskammer und als Haupttrocknungskammer betrieben werden. Dies bedeutet, dass jede dieser Trocknungskammern an einen Kreislauf für eine über ein Heizregister geführte Umluft angeschlossen sein muss, was den Konstruktionsaufwand erhöht, zumal die Trocknungskammern mit entsprechenden Umschalteinrichtung versehen werden müssen, um je nach der Betriebsart entweder den Hauptstrom der vom gemeinsamen Kreuzstromwärmetauscher kommenden, vorgewärmten Zuluft zur Vortrocknung durch die Trocknungskammer zu fördern oder eine Umluftströmung über ein Heizregister aufrechtzuhalten, aus der ein mit einem Teil der vorgewärmten Zuluft zu ersetzender Abluftstrom zur Beaufschlagung des gemeinsamen Kreuzstromwärmetauschers beaufschlagt wird.

### Kurze Beschreibung der Zeichnung

Anhand der Zeichnung wird das erfindungsgemäße Verfahren näher erläutert. Es zeigen
- Fig. 1: eine Vorrichtung zur Durchführung des erfindungsgemäßen Verfahrens zur Holztrocknung in einem vereinfachten Blockschaltbild,
- Fig. 2: eine Vorrichtung zum Trocknen von zu Holzstapeln zusammengefassten Hölzern nach dem erfindungsgemäßen Verfahren in einem schematischen Längsschnitt,
- Fig. 3: eine Ausführungsvariante einer Vorrichtung zur Durchführung des erfindungsgemäßen Verfahrens in einem vereinfachten Blockschaltbild,
- Fig. 4: eine Trocknungskammer gemäß der Vorrichtung nach der Fig. 3 in einer Betriebsstellung für die Haupttrocknung und
- Fig. 5: die Trocknungskammer nach der Fig. 4 in der Betriebsstellung für die Vortrocknung jedoch mit gegensinniger Förderrichtung des Trocknungsluftstroms.

### Weg zur Ausführung der Erfindung

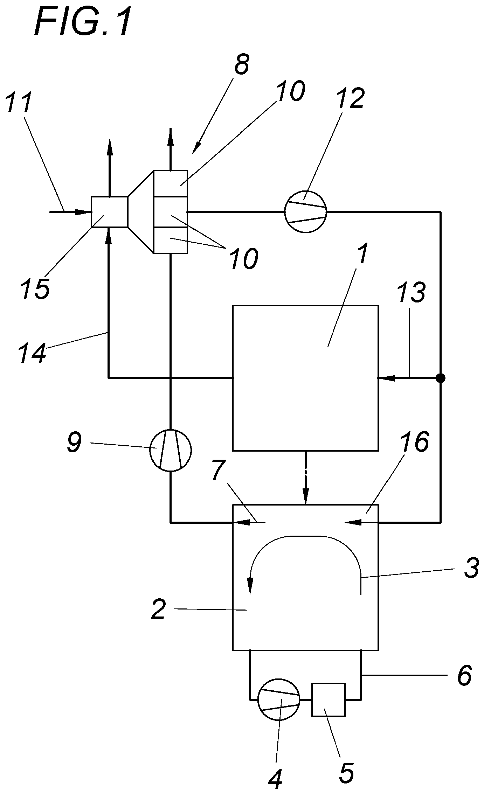

Gemäß der Fig. 1 wird das erfindungsgemäße Verfahren zur Trocknung von Holz in Schüttgutform eingesetzt. Das stückelige Holzgut wird zunächst zur Vortrocknung in eine Vortrocknungskammer 1 und anschließend in eine Haupttrocknungskammer 2 eingebracht. In der Haupttrocknungskammer 2 erfolgt die Trocknung mit Hilfe einer Umluft 3, die über ein Gebläse 4 und über ein Heizregister 5 in einem Kreislauf 6 geführt wird. Ein Teilstrom dieser Umluft 3 wird aus der Umluftströmung ausgeschieden, wobei mit Hilfe der durch diesen Teilstrom gebildeten Abluft 7 ein Kreuzstromwärmetauscher 8 über ein Gebläse 9 beaufschlagt wird. Dieser Kreuzstromwärmetauscher 8 weist mehrere bezüglich der Abluft 7 aus der Haupttrocknungskammer 2 in Reihe geschaltete Wärmetauschereinheiten 10 auf, durch die parallel Zuluft 11 mittels eines Gebläses 12 angesaugt wird. Gemäß der Fig. 1 wird der erwärmte Zuluftstrom 13 für die Vortrocknungskammer 1 nach einer Aufnahme verdampfter Holzfeuchtigkeit als Abluft 14 einem zusätzlichen Kreuzstromwärmetauscher 15 zugefördert, der dem Kreuzstromwärmetauscher 8 für die Zuluft 11 vorgeschaltet ist, um die nach der Abgabe der Verdampfungswärme an das vorzutrocknende Holzgut verbliebene Restwärme zusätzlich zur Vorwärmung der Zuluft 11 nützen zu können.

Die aus der Umluft 3 in der Haupttrocknungskammer 2 ausgeschiedene Abluft 7 wird durch einen Teilstrom 16 der über das Gebläse 12 angesaugten, vorgewärmten Zuluft 11 ersetzt. Mit Hilfe der aus der warmen Umluft 3 abgezogenen Abluft 7 wird im Kreuzstromwärmetauscher 8 eine Zuluftmenge vorgewärmt, die beispielsweise dem 10- bis 20-Fachen der Abluftmenge 7 entspricht. Aufgrund der Beaufschlagung des Kreuzstromwärmetauschers 8 mit diesen unterschiedlichen Luftraten wird in einfacher Weise erreicht, dass ein wesentlicher Teil des in der Abluft 7 aus der Haupttrocknungskammer 2 enthaltenen Wasserdampfs kondensiert, sodass die Kondensationswärme für die Vorwärmung der Zuluft 11 zur Verfügung gestellt werden kann. Aufgrund der dadurch bedingten weitgehenden Ausnützung des gegenüber der Zuluft 11 überschüssigen Wärmeinhalts der Abluft 7 kann auf ein Heizregister für die Vorwärmung der Zuluftströmung 13 zur Vortrocknungskammer 1 verzichtet werden, was besonders vorteilhafte Energieverhältnisse für die Vor- und Haupttrocknung mit sich bringt.

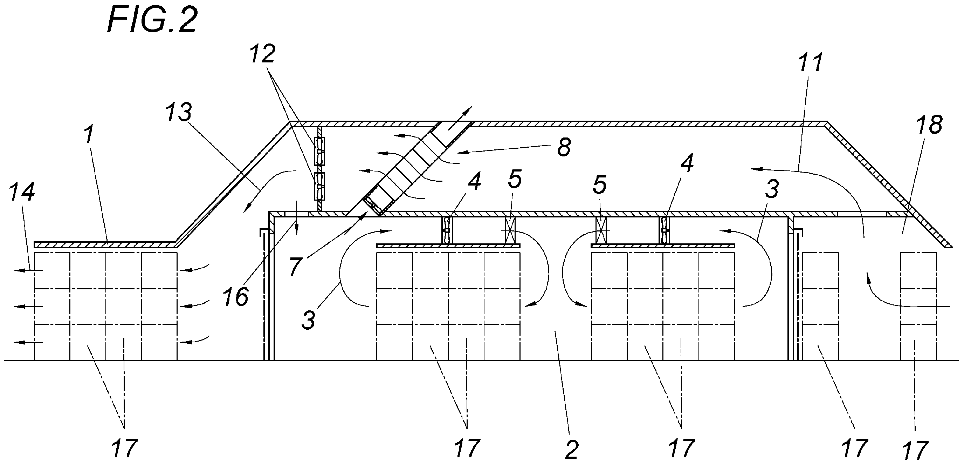

Gemäß der Fig. 2 ist eine Trocknungsvorrichtung vorgesehen, bei der zu Stapeln 17 zusammengefasste Hölzer nacheinander durch eine Vortrocknungskammer 1 und eine anschließende Haupttrocknungskammer 2 gefördert werden. Die nach der Trocknung aus der Haupttrocknungskammer 2 ausgeförderten Holzstapel 17 werden in einer Abkühlzone 18 zwischengelagert, um die Abwärme dieser Holzstapel 17 für die Vorwärmung der Zuluft 11 nützen zu können, bevor diese Zuluft durch im Kreuzstromwärmetauscher 8 in der im Zusammenhang mit der Fig. 1 beschriebenen Art und Weise mit Hilfe der Abluft 7 aus der Haupttrocknungskammer 2 erwärmt wird. Zum Unterschied zu der Fig. 1 weist die Haupttrocknungskammer 2 jedoch zwei Trocknungszonen mit je einer im Kreislauf geführten Umluft 3 auf, wobei durch den beiden Kreislaufströmen zugeordnete Heizregister 5 für die stufenweise Haupttrocknung günstige Temperaturverhältnisse für die voneinander getrennten, gegensinnigen Umluftströmungen 3 sichergestellt werden können. Die im Kreuzstromwärmetauscher 8 erwärmte Zuluft 11 wird im Anschluss an die Gebläse 12 in einen Zuluftstrom 13 für die Vortrocknungskammer 1 und in einen Teilstrom 16 für den Ersatz der aus der Umluft 3 in der Haupttrocknungskammer 2 ausgeschiedenen Abluft 7 aufgeteilt, sodass wiederum die für die Ausnützung des Wärmeinhalts der Abluft 7 vorteilhaften Strömungsraten im Bereich des Kreuzstromwärmetauschers 8 sichergestellt werden. Da im Falle des Ausführungsbeispiels nach der Fig. 2 die Temperaturführung für den erwärmten Zuluftstrom 13 so gewählt ist, dass die Abluft 14 aus der Vortrocknungskammer 1 nur unwesentlich über der Umgebungstemperatur liegt, kann diese Abluft 4 unmittelbar ins Freie ausgeblasen werden.

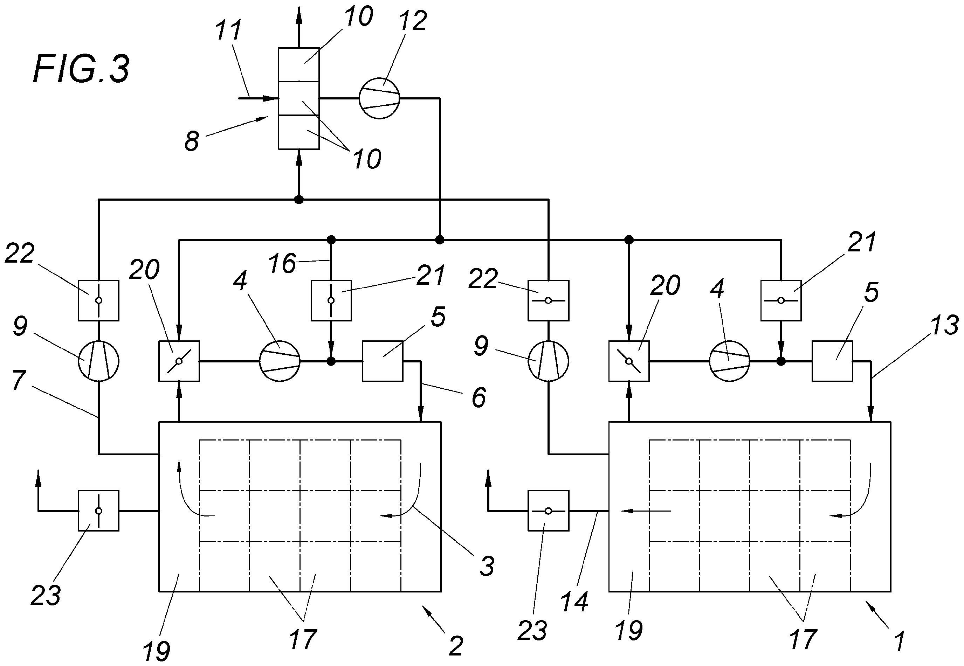

Während nach den Fig. 1 und 2 das Trocknungsgut nacheinander durch die Vortrocknungskammer 1 und dann durch die Haupttrocknungskammer 2 gefördert wird, erfolgt gemäß dem Ausführungsbeispiel nach den Fig. 3 bis 5 sowohl die Vortrocknung als auch die Haupttrocknung in der gleichen Trocknungskammer. Zu diesem Zweck sind entsprechend dem Blockschaltbild nach der Fig. 3 zwei übereinstimmend aufgebaute Trocknungskammern 19 vorgesehen, die abwechselnd als Vortrocknungskammer 1 und als Haupttrocknungskammer 2 betrieben werden. Aus diesem Grunde sind beide Trocknungskammern 19 an je einen Kreislauf 6 für Umluft 3 angeschlossen, der ein Gebläse 4 und ein Heizregister 5 umfasst. Es muss allerdings durch Umschalteinrichtungen 20 und 21 dafür gesorgt werden, dass der Kreislauf 6 für die Umluft ausgeschaltet werden kann. In analoger Weise ist dafür zu sorgen, dass die Abluft 7 aus der als Haupttrocknungskammer 2 betriebenen Trocknungskammer 19 über ein Gebläse 9 dem Kreuzstromwärmetauscher 8 zugefördert wird, während dieser Abluftweg für die als Vortrocknungskammer 1 dienende Trocknungskammer 19 gesperrt wird. Dies wird wiederum durch Schalteinrichtungen 22 in der Beaufschlagungsleitung für den Kreuzstromwärmetauscher 8 erreicht. Für die als Haupttrocknungskammer 2 eingesetzte Trocknungskammer 19 ist die Leitung, die beim Einsatz der Trockenkammer 19 als Vortrocknungskammer 1 zum Abziehen der durch den gesamten Zuluftstrom 13 gebildeten Abluft 14 dient, über eine Schalteinrichtung 23 zu sperren, damit sich innerhalb der Trocknungskammer 19 eine entsprechende Umluftströmung ausbilden kann.

Gemäß den in der Fig. 3 eingezeichneten Schaltstellungen dient die rechte der beiden nebeneinander angedeuteten Trocknungskammern 19 als Vortrocknungskammer 1, die über das Gebläse 12 mit erwärmter Zuluft 11 versorgt wird. Über die Umschalteinrichtung 20 wird der Zuluftstrom 13 über das Gebläse 4 in die Trocknungskammer 19 gefördert, wobei das Heizregister 5 ausgeschaltet ist. Der in die Trocknungskammer 19 geförderte Zuluftstrom 13 wird nach der Aufnahme der verdampften Holzfeuchtigkeit als Abluft 14 über die geöffnete Schalteinrichtung 23 ins Freie abgeblasen.

Im Bereich der linken, als Haupttrocknungskammer 2 dienenden Trocknungskammer 19 ist die Umschalteinrichtung 20 so geschaltet, dass der Kreislauf 6 für die Umluft 3 an die Trocknungskammer 19 angeschlossen ist, sodass die Umluft 3 über das Gebläse 4 und das eingeschaltete Heizregister 5 im Kreislauf geführt wird. Da die Schalteinrichtung 23 geschlossen und die Schalteinrichtung 22 für die Abluft 7 geöffnet ist, wird ein Teil der Umluftströmung als Abluft 7 aus der Umluftströmung ausgeschieden, um mit der ausgeschiedenen Abluft 7 den Kreuzstromwärmetauscher 8 zu beaufschlagen. Wegen der geöffneten Schalteinrichtung 21 kann aus der über das Gebläse 12 angesaugten, erwärmten Zuluft 11 ein Teilstrom 16 als Ersatz für die ausgeschiedene Abluft 7 abgezweigt und dem Kreislauf 6 zugeführt werden.

Ist die Haupttrocknung in der linken, als Haupttrocknungskammer dienenden Trocknungskammer 19 sowie die Vortrocknung der Rechten als Vortrocknungskammer 1 eingesetzten Trocknungskammer 19 abgeschlossen, so können die Holzstapel 17 aus der linken Trocknungskammer 19 ausgefördert und durch zu trocknende, feuchte Holzstapel ersetzt werden, um nach einer entsprechenden Umschaltung der Umschalteinrichtungen 20 bzw. der Schalteinrichtungen 21, 22 und 23 die rechte Trocknungskammer 19 als Haupttrocknungskammer 2 und die linke Trocknungskammer 19 als Vortrocknungskammer 1 zu betreiben.

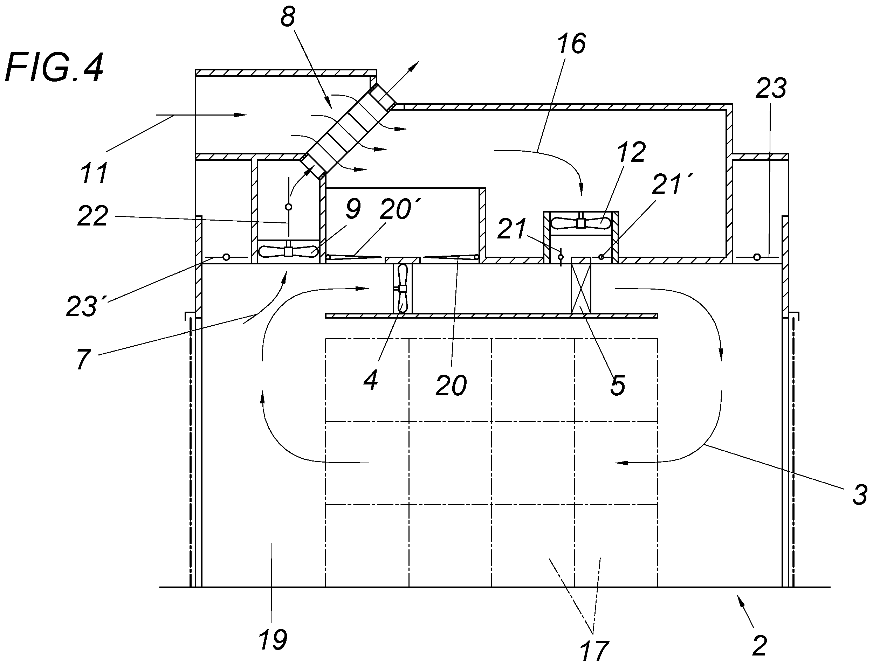

Die Fig. 4 zeigt eine der beiden Trocknungskammer 19 gemäß der Fig. 3 im Einsatz als Haupttrocknungskammer 2. Aus der mit Hilfe des Gebläses 4 über das Heizregister 5 im Kreislauf geführten Umluft 3 wird ein Teil als Abluft 7 aus der Umluftströmung ausgeschieden und mit Hilfe eines Gebläses 9 über die geöffnete Schalteinrichtung 22 dem Kreuzstromwärmetauscher 8 zugefördert, sodass mit Hilfe der ausgeschiedenen Abluft 7 die Zuluft 11 erwärmt wird, von der ein Teilstrom 16 über die Schalteinrichtung 21 der Umluft 3 als Ersatz für die abgezogene Abluft 7 zugefördert wird.

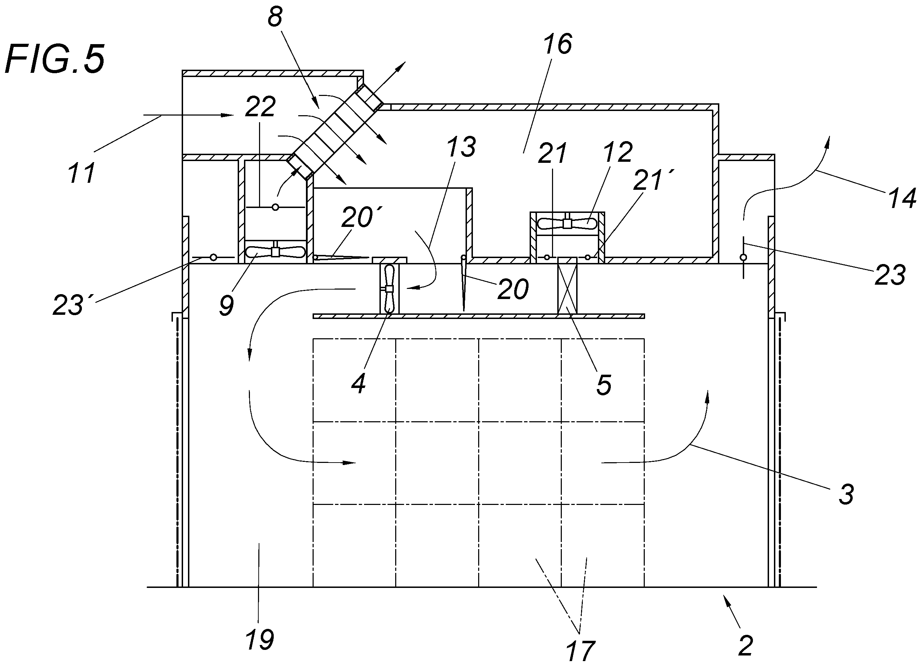

Der Hauptstrom der erwärmten Zuluft wird der anderen als Vortrocknungskammer 1 geschalteten Trocknungskammer 19 zugeführt, und zwar über die Umschalteinrichtung 20, wobei das Gebläse 4 zur Ansaugung dieses Zuluftstroms 13 in die Trocknungskammer 19 dient. Nach dem Durchströmen der Holzstapel 17 wird der Zuluftstrom 13 als Abluft 14 ins Freie abgeblasen, und zwar über die Schalteinrichtung 23. Die Förderrichtung des Gebläses 4 ist dabei im Vergleich zu der Fig. 4 gegensinnig, was jedoch nicht zwingend ist. Die Umschalteinrichtung 20 ist gemäß dem Ausführungsbeispiel nach den Fig. 4 und 5 wie die Schalteinrichtungen 21 und 23 doppelt ausgeführt, wobei die jeweils nicht benutzte Umschalteinrichtung mit 20' bzw. die nicht benutzten Schalteinrichtungen mit 21' bzw. 23' bezeichnet wurden. Es kann somit durch die Wahl der jeweiligen Umschalt- bzw. Schalteinrichtungen der Umluftsinn der Umluft 3 bzw. die Strömungsrichtung der Zuluftströmung 13 durch die Holzstapeln 17 wahlweise umgedreht werden, und zwar sowohl bei der Benützung der Trocknungskammer 19 als Vortrocknungskammer 1 als auch als Haupttrocknungskammer 2.

## Patentansprüche

1. Verfahren zur Holztrocknung, wobei das Holz in einer Vortrocknungskammer (1) mit einer erwärmten, über einen Kreuzstromwärmetauscher (8) angesaugten Zuluft (11) und in einer Haupttrocknungskammer (2) mit einer im Kreislauf (6) über ein Heizregister (5) geführten Umluft (3) beaufschlagt wird, aus der ein Teilstrom als Abluft (7) ausgeschieden und durch Zuluft ersetzt wird, die mit Hilfe der Abluft (7) in einem Kreuzstromwärmetauscher (8) vorgewärmt wird, **dadurch gekennzeichnet, dass** mit der aus der Umluft (3) ausgeschiedenen Abluft (7) ein der Vortrocknungskammer (1) und der Haupttrocknungskammer (2) vorgeschalteter, gemeinsamer Kreuzstromwärmetauscher (8) beaufschlagt wird und dass mit Hilfe des in diesem Kreuzstromwärmetauscher (8) erwärmten Zuluftstroms (11) einerseits das Holz in der Vortrocknungskammer (1) vorgetrocknet und anderseits die aus der Umluft (3) der Haupttrocknungskammer (2) ausgeschiedene Abluft (7) ergänzt wird.

2. Verfahren nach Anspruch 1, **dadurch gekennzeichnet, dass** die aus der Umluft (3) der Haupttrocknungskammer (2) ausgeschiedene Abluft (7) nacheinander mehrere für die Zuluft (11) parallelgeschaltete Wärmetauschereinheiten (10) des Kreuzstromwärmetauschers (8) durchströmt.

3. Verfahren nach Anspruch 1 oder 2, **dadurch gekennzeichnet, dass** die Abluft (14) aus der Vortrocknungskammer (1) einen dem mit der Abluft (7) aus der Haupttrocknungskammer (2) beaufschlagten Kreuzstromwärmetauscher (8) vorgeschalteten Kreuzstromwärmetauscher (15) für die Zuluft (11) beaufschlagt.

4. Verfahren nach einem der Ansprüche 1 bis 3, **dadurch gekennzeichnet, dass** wenigstens zwei Trocknungskammern (19) vorgesehen sind, die abwechselnd als Vortrocknungskammer (1) und als Haupttrocknungskammer (2) betrieben werden.

## Claims

1. Method for drying wood, wherein the wood is subjected, in a pre-drying chamber (1), to heated supply air (11) drawn in via a cross-flow heat exchanger (8) and, in a main drying chamber (2), to circulating air (3) passed via a damper register (5) in the circuit (6), from which circulating air a partial flow is separated as exhaust air (7) and is supplemented by supply air which is pre-heated with the aid of the exhaust air (7) in a cross-flow heat exchanger (8), **characterised in that** the exhaust air (7) separated from the circulating air (3) is fed to a common cross-flow heat exchanger (8) connected upstream of the pre-drying chamber (1) and the main drying chamber (2) and that, with the aid of the supply air flow (11) heated in this cross-flow heat exchanger (8), on the one hand the wood in the pre-drying chamber (1) is pre-dried and on the other hand the exhaust air (7) separated from the circulating air (3) of the main drying chamber (2) is supplemented.

2. Method as claimed in claim 1, **characterised in that** the exhaust air (7) separated from the circulating air (3) of the main drying chamber (2) flows successively through a plurality of heat exchanger units (10) of the cross-flow heat exchanger (8) which are connected in parallel for the supply air (11).

3. Method as claimed in claim 1 or 2, **characterised in that** the exhaust air (14) from the pre-drying chamber (1) is fed to a cross-flow heat exchanger (15) for the supply air (11), which cross-flow heat exchanger is connected upstream of the cross-flow heat exchanger (8) which is fed the exhaust air (7) from the main drying chamber (2).

4. Method as claimed in any one of claims 1 to 3, **characterised in that** at least two drying chambers (19) are provided which are operated in an alternating manner as a pre-drying chamber (1) and as a main drying chamber (2).

## Revendications

1. Procédé de séchage de bois, consistant à exposer le bois, dans une chambre de préséchage (1,) à de l'air frais (11) aspiré et chauffé par l'intermédiaire d'un échangeur de chaleur à courants croisés (8), et, dans une chambre de séchage principale (2), à de l'air circulant (3) guidé en circuit fermé (6) par l'intermédiaire d'un registre de chauffage (5), une partie de l'air circulant étant séparée en tant qu'air évacué (7) et remplacée par de l'air frais, préchauffé dans un échangeur de chaleur à courants croisés (8) à l'aide de l'air évacué (7), **caractérisé en ce que** l'air évacué (7) séparé de l'air circulant (3) est amené dans un échangeur de chaleur à courants croisés (8) commun, disposé en amont de la chambre de préséchage (1) et de la chambre de séchage principale (2), et **en ce que** le flux d'air frais (11), chauffé dans cet échangeur de chaleur à courants croisés (8), d'une part, présèche le bois dans la chambre de préséchage (1) et, d'autre part, compense l'air évacué (7) séparé de l'air circulant (3) de la chambre de séchage principale (2).

2. Procédé selon la revendication 1, **caractérisé en ce que** l'air évacué (7) séparé de l'air circulant (3) de la chambre de séchage principale (2) traverse, successivement, plusieurs unités d'échangeur de chaleur (10), montées en parallèles pour l'air frais (11), de l'échangeur de chaleur à courants croisés (8).

3. Procédé selon la revendication 1 ou 2, **caractérisé en ce que** l'air évacué (14) de la chambre de préséchage (1) alimente un échangeur de chaleur à courants croisés (15) disposé en amont de l'échangeur de chaleur à courants croisés (8), pour l'air frais (11), alimenté par l'air évacué (7) depuis la chambre de séchage principale (2).

4. Procédé selon l'une des revendications 1 à 3, **caractérisé en ce que** sont prévues au moins deux chambres de séchage (19) qui sont exploitées, tour à tour, en tant que chambre de préséchage (1) et en tant que chambre de séchage principale (2).
